# EUROPÄISCHE PATENTSCHRIFT

(11) **EP 1 800 894 B1**
(45) Veröffentlichungstag und Bekanntmachung des Hinweises auf die Patenterteilung: **28.10.2009**
(21) Anmeldenummer: 06025763.1
(22) Anmeldetag: 13.12.2006
(51) Int. Cl.: B43K 23/004, B43K 23/008

(54) **Schreiblernstift**
Writing implement with corrective gripping means
Stylo avec un système de prise pour aider l'apprentissage de l'écriture

(30) Priorität: 20.12.2005 DE 202005019990 U
(43) Veröffentlichungstag der Anmeldung: 27.06.2007
(73) Patentinhaber: Rudolf Sellner Ges.mbH, 4614 Marchtrenk (AT)
(72) Erfinder: Hebesberger, Robert, 4563 Micheldorf (AT)
(74) Vertreter: Hofmann, Matthias

(56) Entgegenhaltungen:
- DE-U1- 29 720 024
- JP-A- 2 098 500
- US-A- 1 861 241

## Beschreibung

Die Erfindung betrifft einen Schreiblernstift nach dem Oberbegriff des Anspruchs 1.

Derartige Schreiblernstifte sind durch offenkundige Vorbenutzung bekannt. Das Auffinden der richtigen Griffposition, also der korrekten Schreibstellung bzw. -haltung ist bei derartigen Schreiblernstiften nicht immer einfach.

Die DE 297 20 024 U1 zeigt einen Füllfederhalter mit einem gegenüber einem sonstigen Gehäuse zurückspringenden oberen Griffflächenbereich.

Es ist daher eine Aufgabe der vorliegenden Erfindung, einen Schreiblernstift der eingangs genannten Art derart weiterzubilden, dass das Auffinden einer korrekten Griffposition insbesondere für Schreibanfänger erleichtert ist.

Diese Aufgabe ist erfindungsgemäß gelöst durch einen Schreiblernstift mit den im Kennzeichnungsteil des Anspruchs 1 angegebenen Merkmalen.

Erfindungsgemäß wurde erkannt, dass eine Längsrippe in der Griffzone sich besonders gut als Markierung für eine korrekte Griffposition eignet, die leicht ertastet werden kann. Fehler in der Griffposition, etwa unerwünschtes Verdrehen des Stiftes oder falsche axiale Griffposition, können hierdurch einfach korrigiert werden. Es reicht aus, wenn die Längsrippe einen Überstand über den Umfang des Stiftgehäuses im Bereich von einigen Millimetern hat. Bevorzugt ist ein Überstand von etwa 5 mm. Die Längsrippe verhindert zudem ein unerwünschtes Wegrollen des abgelegten Schreiblernstifts. Der Schreiblernstift ist insbesondere als Schulfüller geeignet. Die Längsrippe ist gleichermaßen für Rechts- und Linkshänder einsetzbar. Bei korrekter Griffposition liegt diese Längsrippe zwischen Dauund Zeigefinger des Benutzers, sodass bei korrekter Griffposition eine eindeutige haptische Rückmeldung an den Benutzer erfolgt.

Umfangserstreckungen nach Anspruch 2 sowie Längserstreckungen nach Anspruch 3 haben sich für die Funktion der Längsrippe als besonders geeignet herausgestellt. Mit derartigen Erstreckungen kann die Längsrippe einerseits einfach ertastet werden, stört andererseits aber auch nicht den Schreibablauf.

Eine Längsrippe nach Anspruch 4 lässt sich kostengünstig fertigen. Eine separate Befestigung der Längsrippe an der Griffzone entfällt.

Ein konvex gebogener führender Abschnitt nach Anspruch 5 vermeidet störende Druckstellen an den an der Längsrippe anliegenden Fingern des Benutzers.

Eine Auskehlung nach Anspruch 6 spart Material.

Ausführungsbeispiele der Erfindung werden nachfolgend an Hand der Zeichnung näher erläutert. In dieser zeigen.
- Fig. 1: eine erste Ausführungsform eines Schreiblernstifts ohne Verschlusskappe;
- Fig. 2: den Schreiblernstift nach Fig. 1 mit Verschlusskappe;
- Fig. 3: einen eine Schreibspitze umfassenden Abschnitt einer weiteren Ausführungsform eines Schreiblernstifts ohne Verschlusskappe;
- Fig. 4: den Schreiblernstift nach Fig. 3 mit Verschlusskappe; und
- Fig. 5: eine zu Fig. 1 ähnliche Darstellung einer weiteren Ausführungsform eines Schreiblernstifts.

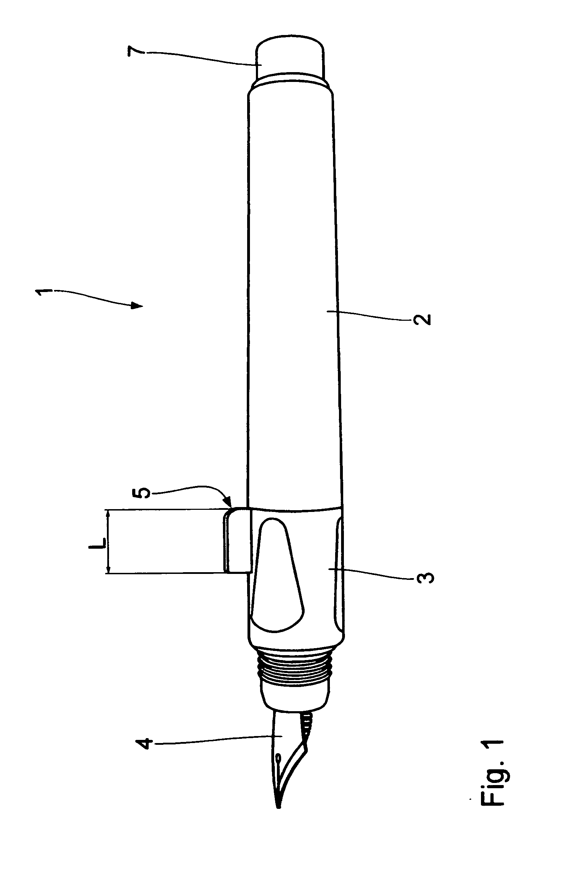

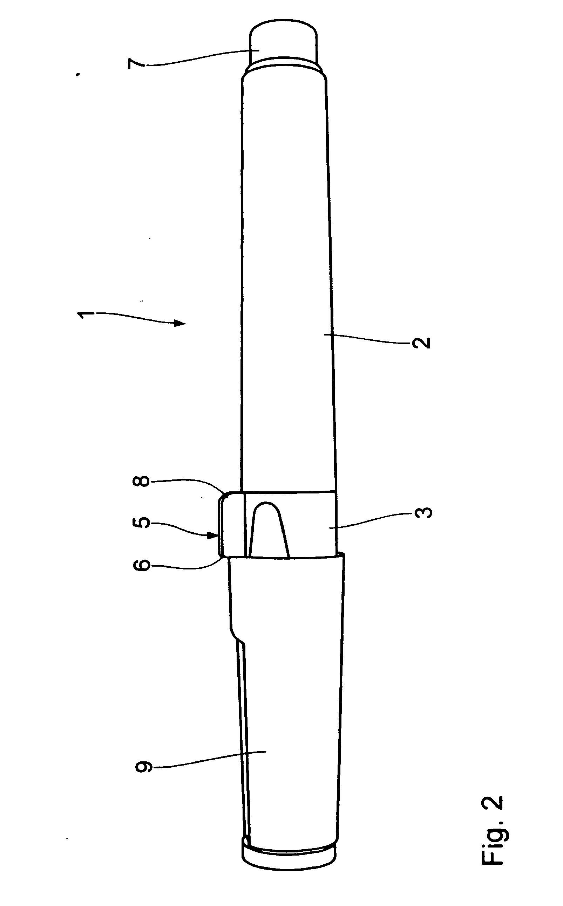

Ein Schreiblernstift 1 nach den Figuren 1 und 2 hat ein Stiftgehäuse 2, welches eine Griffzone 3 aus griffigem Kunststoff mit hohem Reibungskoeffizienten aufweist. Die Griffzone 3 liegt dort, wo bei korrekter Stifthaltung die Enden von Daumen, Zeige- und Mittelfinger des Benutzers am Schreiblernstift 1 anliegen. Der Schreiblernstift 1 ist als Tintenfüller, zum Beispiel als Schulfüller, ausgeführt.

Eine Schreibfeder 4 des Schreiblernstifts 1 ist zu einer die Längsachse des Schreiblernstifts 1 enthaltenden Symmetrieebene spiegelsymmetrisch. Diese Symmetrieebene verläuft in etwa parallel zur Zeichenebene der Figuren 1 und 2. In dieser Symmetrieebene erstreckt sich eine Längsrippe 5 der Griffzone 3. Die Längsrippe 5 ist einstückig an die Griffzone 3 angeformt. Diese Längsrippe 5 ragt über den Umfang des Stiftgehäuses 2, insbesondere im Bereich der Griffzone 3, in den Figuren 1 und 2 nach oben um etwa 5 mm hinaus. Die Längsrippe 5 hat eine Stärke und damit eine Umfangserstreckung, die im Bereich zwischen 1 mm und 2 mm liegt. Die Längsrippe 5 hat eine Längserstreckung, die im Bereich zwischen 1 cm und 2 cm liegt. Diese Längserstreckung ist in Fig. 1 mit L bezeichnet.

Der Querschnitt der Längsrippe 5, geschnitten in der Symmetrieebene, ist in etwa rechteckig, wobei eine der Schreibfeder 4 zugewandte Ecke 6 vergleichsweise scharfkantig und eine einem Stiftende 7 zugewandte Ecke 8 der Längsrippe 5 abgerundet ausgeführt ist.

Fig. 2 zeigt den Schreiblernstift 1 mit aufgeschraubter Verschlusskappe 9.

Die Anordnung und Formgebung der Längsrippe 5 an der Griffzone 3 hat zur Folge, dass die Längsrippe 5 bei korrekter Schreibhaltung des Benutzers bzw. bei korrekter Griffposition zwischen dessen Daumen und Zeigefinger zu liegen kommt. Die Längsrippe 5 bietet daher eine Orientierungshilfe zum Finden der korrekten Griffposition. Ferner verhindert die Längsrippe 5 ein Wegrollen des abgelegten Schreiblernstifts 1.

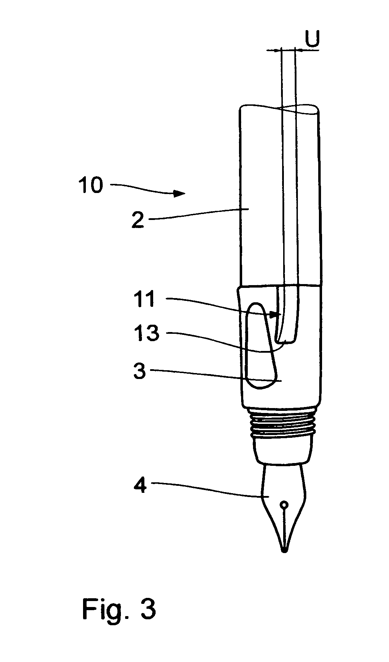

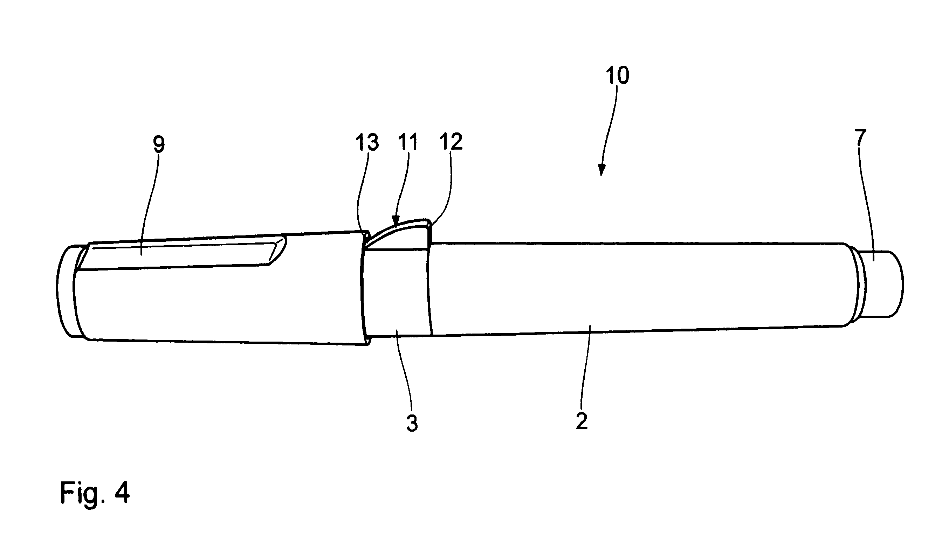

Figuren 3 und 4 zeigen eine weitere Ausführungsform eines Schreiblernstifts 10. Komponenten, die denjenigen entsprechen, die vorstehend schon unter Bezugnahme auf die Figuren 1 und 2 beschrieben wurden, tragen die gleichen Bezugsziffern und werden nicht nochmals im Einzelnen erläutert.

Vom Schreiblernstift 1 nach den Figuren 1 und 2 unterscheidet sich der Schreiblernstift 10 nach den Figuren 3 und 4 durch die Querschnittsform der Längsrippe 11 in der Symmetrieebene. Diese Querschnittsform erinnert an die Rückenflosse eines Hais. Der Schreibfeder 4 des Schreiblernstifts 10 zugewandt verjüngt sich die Längsrippe 11 bogenförmig. Hin zum Stiftende 7 weist die Längsrippe 11 eine relativ scharfkantige Ecke 12 auf, die ähnlich zur Ecke 6 des Schreiblernstifts 1 gestaltet ist. Die Funktion der Längsrippe 11 entspricht derjenigen der Längsrippe 5. Zusätzlich kann der Stift mit der Längsrippe 11 so gehalten werden, dass der Zeigefinger des Benutzers zum Teil auf einem führenden Abschnitt 13 der Längsrippe 11, also im Bereich von deren stärkster Verjüngung, aufliegt, was die Haltesicherheit bei der korrekten Griffposition nochmals verbessert.

Die Umfangserstreckung der Längsrippe 11 ist in der Fig. 3 durch den Abstand U angedeutet.

Beide Schreiblernstifte 1, 10 sind aufgrund der Symmetrie der Anordnung der Längsrippen 5, 10 sowohl für Rechts- als auch für Linkshänder geeignet.

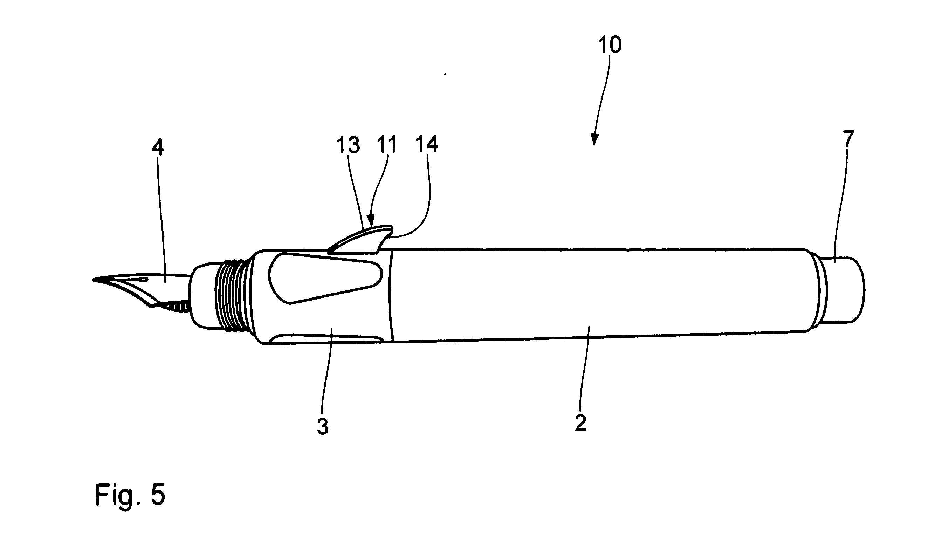

Fig. 5 zeigt eine weitere Ausführungsform eines Schreiblernstifts 10. Komponenten, die denjenigen entsprechen, die vorstehend schon unter Bezugnahme auf die Fig. 1 bis 4 beschrieben wurden, tragen die gleichen Bezugsziffem und werden nicht nochmals im Einzelnen erläutert.

Vom Schreiblernstift 10 nach den Fig. 3 und 4 unterscheidet sich der Schreiblernstift 10 nach Fig. 5 durch die Querschnittsform der Längsrippe 11 in der Symmetrieebene. Die Längsrippe 11 erinnert im Querschnitt an die Rückenflosse eines Hais. Der Schreibfeder 4 des Schreiblernstifts 10 zugewandt, also in einem führenden Abschnitt 13 der Längsrippe 11, verjüngt sich diese wiederum bogenförmig. Ein gegenüberliegender Abschnitt 14 ist als Auskehlung ausgeführt, sodass die Längsrippe 11 nach Fig. 5 bei im Vergleich zur Längsrippe nach den Fig. 3 und 4 gleicher Länge längs der Stift-Längsachse und bei gleicher Stärke weniger Material braucht.

Die konvexe Bogenform des führenden Abschnitts 13 vermeidet bei den Ausführungen nach den Fig. 3 bis 5 Druckstellen an den hieran anliegenden Fingern des Benutzers.

## Patentansprüche

1. Schreiblernstift (1; 10) mit einem Stiftgehäuse (2), welches eine Griffzone (3) aufweist, die mindestens eine Längsrippe (5; 11) aufweist, die über den Umfang des Stiftgehäuses (2) hinausragt, **gekennzeichnet durch** eine Schreibfeder (4), die zu einer die Längsachse des Schreiblernstifts (1; 10) enthaltenden Symmetrieebene spiegelsymmetrisch ist, wobei sich die Längsrippe (5; 11), auf der Oberseite der Griffzone (3), in der Symmetrieebene erstreckt.

2. Schreiblernstift nach Anspruch 1, **dadurch gekennzeichnet, dass** die Längsrippe (5; 11) eine Umfangserstreckung (U) hat, die im Bereich zwischen 1 mm und 2 mm liegt.

3. Schreiblernstift nach Anspruch 1. oder 2, **dadurch gekennzeichnet, dass** die Längsrippe (5; 11) eine Längserstreckung (L) hat, die im Bereich zwischen 1 cm und 2 cm liegt.

4. Schreiblernstift nach einem der Ansprüche 1 bis 3, **dadurch gekennzeichnet, dass** die Längsrippe (5; 11) einstückig an die Griffzone (3) angeformt ist.

5. Schreiblernstift nach einem der Ansprüche 1 bis 4, **dadurch gekennzeichnet, dass** ein führender Abschnitt (13) der Längsrippe (11) konvex gebogen ausgeführt ist.

6. Schreiblernstift nach Anspruch 5, **dadurch gekennzeichnet, dass** ein dem führenden Abschnitt (13) gegenüberliegender Abschnitt (14) als Auskehlung ausgeführt ist.

## Claims

1. Writing pen (1; 10) for learning how to write, the writing pen (1; 10) comprising a pen housing (2) which comprises a grip zone (3) which comprises at least one longitudinal rib (5; 11) which projects beyond the periphery of the pen housing (2), **characterised by** a nib (4) which is mirror-symmetric to a symmetry plane containing the longitudinal axis of the writing pen (1; 10), with the longitudinal rib (5; 11) extending in the symmetry plane on the surface of the grip zone (3).

2. Writing pen for learning how to write according to claim 1, **characterised in that** the longitudinal rib (5; 11) has a peripheral extension (U) which is in the range between 1 mm and 2 mm.

3. Writing pen for learning how to write according to claim 1 or 2, **characterised in that** the longitudinal rib (5; 11) has a longitudinal extension (L) which is in the range between 1 cm and 2 cm.

4. Writing pen for learning how to write according to any one of claims 1 to 3, **characterised in that** the longitudinal rib (5; 11) is formed in one piece with the grip zone (3).

5. Writing pen for learning how to write according to any one of claims 1 to 4, **characterised in that** a leading portion (13) of the longitudinal rib (11) is convexly curved.

6. Writing pen for learning how to write according to claim 5, **characterised in that** a portion (14) arranged opposite to the leading portion (13) is designed as a chamfer.

## Revendications

1. Stylo pour aider l'apprentissage de l'écriture (1 ; 10) avec un boîtier de stylo (2), qui présente une zone de préhension (3), laquelle présente au moins une nervure longitudinale (5 ; 11), qui dépasse de la périphérie du boîtier de stylo (2), **caractérisé par** une plume (4) qui est en symétrie de miroir par rapport à un plan de symétrie contenant l'axe longitudinal du stylo pour aider l'apprentissage de l'écriture (1 ; 10), la nervure longitudinale (5 ; 11) s'étendant dans le plan de symétrie, sur la face supérieure de la zone de préhension (3).

2. Stylo pour aider l'apprentissage de l'écriture selon la revendication 1, **caractérisé en ce que** la nervure longitudinale (5 ; 11) a une extension périphérique (U) qui se situe dans la plage comprise entre 1 mm et 2 mm.

3. Stylo pour aider l'apprentissage de l'écriture selon la revendication 1 ou 2, **caractérisé en ce que** la nervure longitudinale (5 ; 11) a une extension longitudinale (L) qui se situe dans la plage comprise entre 1 cm et 2 cm.

4. Stylo pour aider l'apprentissage de l'écriture selon l'une quelconque des revendications 1 à 3,
**caractérisé en ce que** la nervure longitudinale (5 ; 11) est moulée d'un seul tenant sur la zone de préhension (3).

5. Stylo pour aider l'apprentissage de l'écriture selon l'une quelconque des revendications 1 à 4,
**caractérisé en ce qu'**une section guide (13) de la nervure longitudinale (11) est réalisée avec une courbure convexe.

6. Stylo pour aider l'apprentissage de l'écriture selon la revendication 5, **caractérisé en ce qu'**une section (14) faisant face à la section guide (13) est réalisée sous forme de cannelure.
